# EUROPÄISCHE PATENTANMELDUNG

(11) **EP 4 749 016 A1**
(43) Veröffentlichungstag der Anmeldung: **27.05.2026**
(21) Anmeldenummer: 25000110.4
(22) Anmeldetag: 20.11.2025
(51) Int. Cl.: D07B 7/16, D07B 9/00, F16G 11/02, F16G 11/08, B23K 11/11, B23K 11/28, B23K 11/31

(54) **VERFAHREN UND VORRICHTUNG ZUM VERBINDEN VON ZWEI STAHLSEILENDEN SOWIE DAMIT HERGESTELLTE STAHLSEILVERBINDUNG**

(30) Priorität: 26.11.2024 CH 12882024
(71) Anmelder: Railaction GmbH, 9430 St. Margrethen (CH)
(72) Erfinder: Duygu, Mehmet, 9430 St. Margrethen (CH)
(74) Vertreter: Römpler, Aldo

(57) **Zusammenfassung**

Beim erfindungsgemässen Verfahren zum Verbinden von zwei Stahlseilenden (1, 2) wird mindestens ein Metallgewebeschlauch (4) über mindestens eines der beiden Stahlseilenden (1, 2) gezogen, wobei der mindestens eine Metallgewebeschlauch (4) und das mindestens eine Stahlseilende (1, 2) mittels Schweissverbindungen haltbar miteinander verbunden werden. Die beiden Stahlseilenden (1, 2) sind axial voneinander beabstandet und mit einem Metallgewebeschlauch (4) oder mit einem Verbindungsgelenk verbunden. Dadurch werden Verdrillungen zwischen den Stahlseilenden (1, 2) verhindert. Die Schweissverbindungen können mittels einer Vorrichtung angebracht werden, die mindestens eine Punktschweisselektrode und mindestens eine Halterung für das jeweilige, mit einem Metallgewebeschlauch (4) ummantelten Stahlseilende (1, 2) aufweist. Diese Vorrichtung kann mehrere Punktschweisselektroden aufweisen, die jeweils in einem Winkel auf die Stahlseilenden (1, 2) ausgerichtet sind.

## Beschreibung

Die vorliegende Erfindung betrifft ein Verfahren zum Verbinden von zwei Stahlseilenden und eine Vorrichtung zur Ausführung dieses Verfahrens sowie eine damit hergestellte Stahlseilverbindung von zwei Stahlseilenden.

Wo Stahlseile eingesetzt werden, ergibt sich häufig die Notwendigkeit, zwei axial fluchtend einander gegenüberliegende Stahlseilenden miteinander zu verbinden. Das kann beispielsweise in Aufzugsanlagen der Fall sein, wo als Tragseile eingesetzte Stahlseile aufgrund beschränkter Lebensdauer irgendwann zu ersetzen sind. Dabei ist zunächst ein Ende des alten Stahlseils zu lösen und mit einem Ende des neuen Stahlseils in der Seilachse zu verbinden. Danach wird das alte Stahlseil herausgezogen, wodurch das daran hängende neue Stahlseil eingezogen wird. Danach wird das alte Stahlseil vom neuen Stahlseil wieder getrennt. In diesem speziellen Fall handelt es sich also um eine temporäre Verbindung der beiden Stahlseilenden. Darüber hinaus gibt es jedoch etliche andere Einsatzmöglichkeiten von Stahlseilverbindungen.

Es wurde vorgeschlagen, die beiden Stahlseilenden mit einem schlauchartigen Geflecht zu verbinden, das über beide Stahlseilenden gezogen wird. Durch Zug in axialer Richtung streckt sich dieses schlauchartige Geflecht in die Länge, verringert dadurch seinen Querschnitt und klemmt sich auf den Stahlseilenden fest. Dies ergibt jedoch keine ausreichende Zugfestigkeit der Seilverbindung, nicht einmal zu temporären Zwecken. Um diesem Nachteil entgegenzuwirken, wurden entsprechende Geflechte aus Kunststofffäden hoher Festigkeit vorgeschlagen, wobei auch die Ausbildung des schlauchartigen Geflechts als Schrumpfschlauch vorgesehen werden kann. Das heisst, als thermoplastischer Schlauch, der sich unter Hitzeeinwirkung radial stark zusammenzieht. Diesen Lösungen sind allerdings verschiedene Nachteile gemein. Beispielsweise bei einem eingangs genannten Seilwechsel kommt es darauf an, dass die beiden Stahlseile zueinander beweglich bleiben und nicht starr verkanten, um sie zum Beispiel ohne Schwierigkeiten über Führungsrollen einziehen zu können.

Auf der Grundlage dieser Erkenntnisse setzt sich die Erfindung die Aufgabe, ein Verfahren zu schaffen, mit dem zwei Stahlseilenden auf einfache aber sichere Art und Weise miteinander verbunden werden können. Weiter soll eine Vorrichtung zur Ausführung dieses Verfahrens angegeben werden sowie eine damit hergestellte Stahlseilverbindung.

Das erfindungsgemässe Verfahren entspricht den kennzeichnenden Merkmalen des Patentanspruchs 1. Die damit hergestellte Stahlseilverbindung geht aus dem Patentanspruch 4 hervor. Die erfindungsgemässe Vorrichtung entspricht dem Patentanspruch 11. Weitere vorteilhafte Ausbildungen der Erfindung sind aus den abhängigen Patentansprüchen ersichtlich.

Nachfolgend werden Ausführungsbeispiele der Erfindung anhand der schematischen Zeichnung näher beschrieben.
- Fig. 1: zeigt die Ansicht eines ersten Ausführungsbeispiels einer Verbindung von zwei Stahlseilenden;
- Fig. 2: zeigt einen Längsschnitt der Verbindung nach Fig. 1;
- Fig. 3: zeigt die Ansicht eines zweiten Ausführungsbeispiels einer Verbindung von zwei Stahlseilenden;
- Fig. 4: zeigt eine weitere Ansicht der Verbindung nach Fig. 3;
- Fig. 5: zeigt einen Längsschnitt der Verbindung nach Fig. 4;
- Fig. 6: zeigt die Ansicht einer Vorrichtung, die bei der Verbindung von zwei Stahlseilenden verwendbar ist;
- Fig. 7: zeigt eine Seitenansicht auf die Vorrichtung nach Fig. 6 in axialer Richtung eines Stahlseilendes;
- Fig. 8: zeigt eine Draufsicht der Vorrichtung nach Fig. 6 und 7;
- Fig. 9: zeigt die Ansicht einer vereinfachten Ausführung der Vorrichtung zum Verbinden von zwei Stahlseilenden.

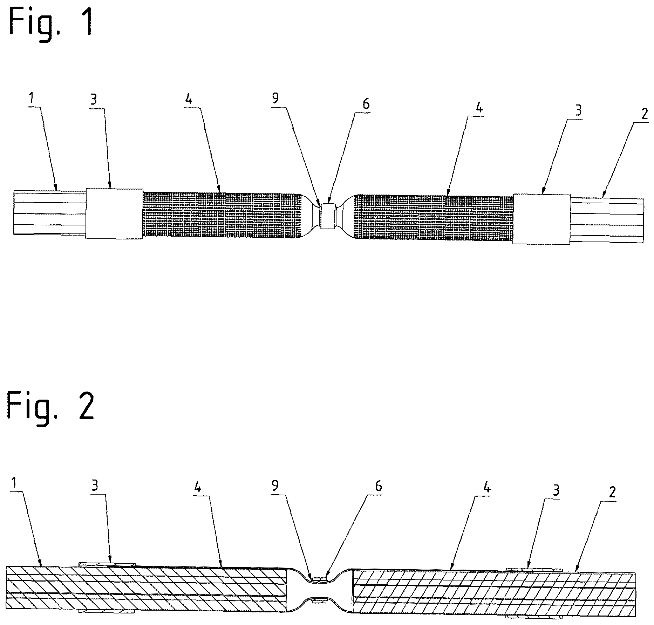

In der Darstellung nach Fig. 1 ist links ein erstes Stahlseilende 1 und rechts ein zweites Stahlseilende 2 zu sehen. Diese beiden Stahlseilenden 1 und 2 sind axial fluchtend einander gegenüberliegend angeordnet und sind miteinander zu verbinden.

Auf die beiden Stahlseilenden 1 und 2 ist ein sich in dieser Ausführung nach Fig. 1 und 2 über beide Stahlseilenden 1 und 2 erstreckender, einziger Metallgewebeschlauch 4 aufgezogen. Dieser Metallgewebeschlauch 4 wird mittels Schweissverbindungen mit den Stahlseilenden 1 und 2 verbunden. Darauf wird später im Detail eingegangen.

Der Metallgewebeschlauch 4 kann zusätzlich mittels mindestens eines Wärmeschrumpfschlauchs 3 am Stahlseilende 1 oder 2 festgehalten sein. In den Ausführungen nach den Fig. 1 bis 5 ist je ein Wärmeschrumpfschlauch 3 an den freien Enden des Metallgewebeschlauchs 4, die den jeweiligen entgegengesetzten Stahlseilenden 1 oder 2 abgewandt sind, angeordnet. Dadurch ergibt sich jeweils auch eine Schutzabdeckung über die freien Endkanten des Metallgewebeschlauchs 4.

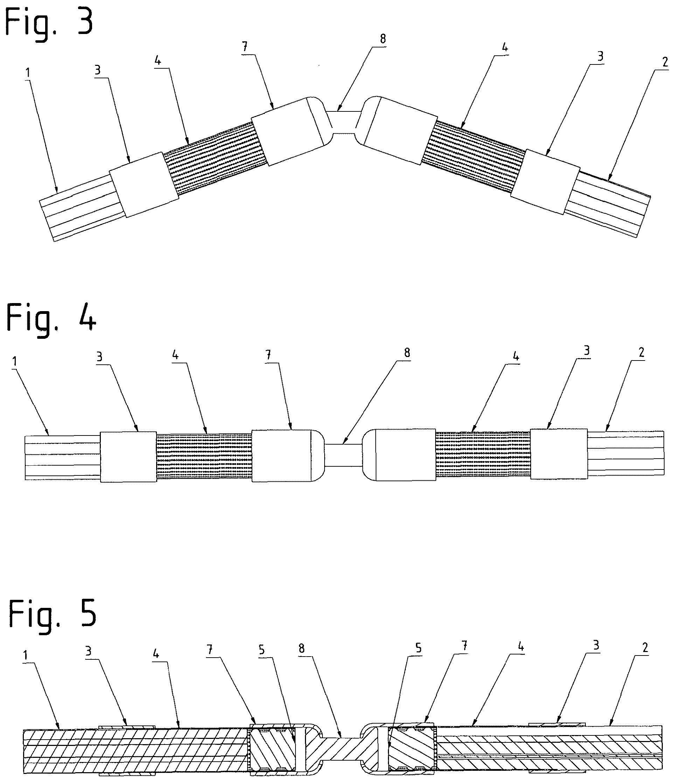

Die beiden Stahlseilenden 1 und 2 sind in diesem Ausführungsbeispiel voneinander beabstandet angeordnet. Dadurch sind sie zueinander beweglich. Eine Vorstellung davon gibt die Darstellung des zweiten Ausführungsbeispiels nach Fig. 3. Der zwischen den beiden Stahlseilenden 1 und 2 liegende Teil des Metallgewebeschlauchs 4 kann, gemäss den Fig. 1 und 2, mit einer Hülse oder mit einem Ring 6 versehen sein, der in dieser Ausführung einen kleineren Querschnitt als der Metallgewebeschlauch 4 aufweist und daher den Querschnitt der Stahlseilverbindung in diesem Bereich verringert. Zum Schutz des Metallgewebeschlauchs 4 kann zwischen diesem und der Hülse oder dem Ring 6 ein Gummiring 9 angeordnet sein, beziehungsweise ein Ring aus einem gummielastischen Material. Die Hülse oder der Ring 6 kann auch als Anschlag für die beiden Stahlseilenden 1 und 2 dienen.

In der zweiten Ausführung der Stahlseilverbindung nach den Fig. 3 bis 5 ist ebenfalls ein Metallgewebeschlauch 4 vorgesehen, doch sind es hier deren zwei, nämlich je einen separaten Metallgewebeschlauch 4 für das erste und für das zweite Stahlseilende 1 und 2. In diesem Fall dienen die beiden verschweissten Metallgewebeschäuche 4 dazu, die Drähte und Litzen der abgeschnittenen Stahlseilenden 1 und 2 kompakt und fest zusammenzuhalten, um eine sichere Stahlseilverbindung bewerkstelligen zu können. Auch in diesem Ausführungsbeispiel sind die beiden Stahlseilenden 1 und 2 voneinander beabstandet angeordnet. Es können ebenfalls Wärmeschrumpfschläuche 3 vorhanden sein. Auf die einander gegenüberliegenden, freien Stahlseilenden 1 und 2 ist jedoch noch je eine Presshülse 7 aufgesetzt, wobei diese gemäss Fig. 5 beispielsweise auf einem Pressring 5 sitzen kann. Die beiden Presshülsen 7 sind speziell geformt und angeordnet. Sie weisen eine über das jeweilige Stahlseilende 1 und 2 hinausragende Querschnittsverjüngung auf. In diese ragt ein Verbindungsgelenk 8 hinein, beziehungsweise querschnittsverbreiternde Ausformungen dieses Verbindungsgelenkes 8. In der dargestellten, bevorzugten Ausführung, sind die Querschnittsverjüngungen der beiden Presshülsen 7 und die querschnittsverbreiternden Ausformungen des Verbindungsgelenkes 8 im Querschnitt gekurvt ausgebildet. Dadurch ergibt sich eine sowohl knick- wie auch drehbar gelagerte Gelenkverbindung. Somit werden Verkantungen und Verdrillungen zwischen dem ersten und dem zweiten Stahlseilende 1 und 2 wirksam verhindert. Dadurch können sie zueinander noch beweglicher sein, als dies in der einfacheren Ausführung nach den Fig. 1 und 2 der Fall ist.

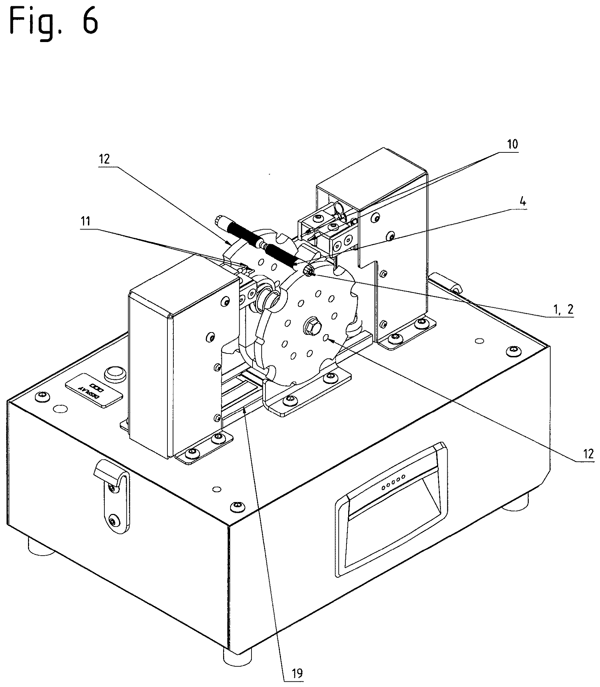

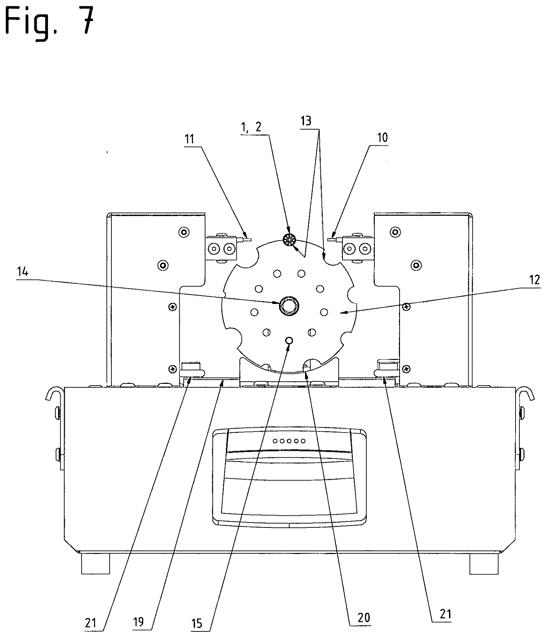

Die in den Fig. 6 bis 8 dargestellte Vorrichtung dient dem angesprochenen, jeweiligen Verschweissen der beiden Stahlseilenden 1 und 2 mit dem Metallgewebeschlauch 4. Die als Ausführungsbeispiel gezeichnete Vorrichtung ist leicht transportabel und geschützt in einem Koffer untergebracht, wobei dessen abgehobener Deckel nicht dargestellt ist. Neben technisch bekannten Einrichtungen zur Stromversorgung und Steuerung, sind im Wesentlichen zwei Elemente vorhanden, nämlich mindestens eine Punktschweisselektrode 10 und 11 sowie mindestens eine Halterung 12 für das jeweilige, mit einem Metallgewebeschlauch 4 ummantelte Stahlseilende 1 oder 2. Wie aus den Zeichnungen ersichtlich, sind in diesem Ausführungsbeispiel zwei Halterungen 12 vorhanden. Im Prinzip je eine für ein Stahlseilende 1 oder 2. Deren Formgebung geht insbesondere aus von Fig. 7 hervor, die eine Seitenansicht auf die Vorrichtung in axialer Richtung eines Stahlseilendes 1 oder 2 darstellt. Die mindestens eine Punktschweisselektrode 10 und 11 ist im Winkel zum aufliegenden Stahlseilende 1 oder 2 ausgerichtet, zum Beispiel im rechten Winkel.

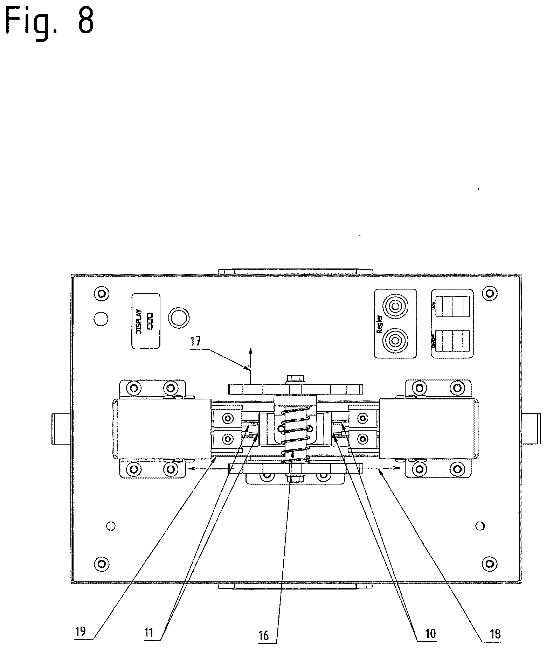

Da im praktischen Einsatz zu verbindende Stahlseilenden 1 oder 2 unterschiedlichen Durchmessers vorgefunden werden können, sollte auch die mindestens eine Halterung 12 vorzugsweise unterschiedlichen Seildurchmessern angepasst werden können. Im vorliegenden Ausführungsbeispiel ist daher diese Halterung 12 scheibenförmig ausgebildet, siehe insbesondere die Fig. 7. Die Halterung 12 weist an ihrem Umfang mindestens zwei Auflagen 13 auf, in die jeweils ein mit einem entsprechenden Metallgewebeschlauch 4 ummanteltes Stahlseilende 1 oder 2 einlegbar ist. In diesem Ausführungsbeispiel sind diese Auflagen 13 als Ausbuchtungen am Umfang der Halterung 12 ausgeformt. Es sind neun Auflagen 13 unterschiedlichen Durchmessers vorhanden, in die jeweils ein mit einem entsprechenden Metallgewebeschlauch 4 ummanteltes Stahlseilende 1 oder 2 einlegbar ist. Die scheibenförmige Halterung 12 ist derart rotierbar, dass die jeweils benötigte Auflage 13 in einer Arbeitsposition liegt, in diesem Fall oben. In Fig. 7 ist es diejenige Auflage, in der das Stahlseilende 1 oder 2 aufliegt. Durch Rotation der scheibenförmigen Halterung 12 um eine parallel zum aufliegenden Stahlseilende 1 oder 2 liegenden Rotationsachse 14, lässt sich die gewünschte Auflage 13 in Position bringen. Diese Rotationsposition entspricht einer Stahlseilauflageachse zwischen den hier sichtbaren zwei Punktschweisselektroden 10 und 11 und kann mittels einer ersten Verstellsicherung mit einem Positionierstift 15 arretiert werden. Diese erste Verstellsicherung weist gemäss Fig. 8 eine Druckfeder 16 auf. Zum Ein- und Ausrasten ist die mindestens eine Halterung 12 in einer ersten Pfeilrichtung 17 vor und zurück verschiebbar.

Eine zweite Verstellmöglichkeit der mindestens einen Halterung 12 ist im vorliegenden Ausführungsbeispiel im rechten Winkel zur Stahlseilauflageachse des aufliegenden Stahlseilendes 1 oder 2 ausgerichtet. Dadurch lässt sich die Halterung 12, das heisst, die beiden Halterungen 12, gemäss der zweiten Pfeilrichtung 18 entlang mindestens einer Führung 19, beispielsweise einer Laufschiene, nach links oder rechts bewegen. Also zur mindestens einen, ersten Punktschweisselektrode 10 oder zur mindestens einen, zweiten Punktschweisselektrode 11 hin. Mittels einer als Arretierung 20 ausgebildeten, zweiten Verstellsicherung, kann die Querposition der mindestens einen Halterung 12 festgelegt werden. Die Arretierung 20 kann ebenfalls ein Stift sein. Links und rechts können zudem Anschlagpuffer 21 vorhanden sein.

Wie aus den Fig. 6 und 8 erkennbar, sind auf jeder Seite der mindestens einen Halterung 12 in der vorliegenden Ausführung je zwei Punktschweisselektroden 10 oder 11 angeordnet, die entlang der Stahlseilauflageachse voneinander beabstandet sind. Dadurch lassen sich entlang des Stahlseilendes 1 oder 2 gleichzeitig mindestens zwei Punktschweissungen ausführen, um diesen mit dem ihn umgebenden Metallgewebeschlauch 4 zu verbinden. Es ist aber nicht ausgeschlossen, je Seite auch mehr als zwei Punktschweisselektroden 10 oder 11 vorzusehen.

In jedem Fall kann ein Metallgewebeschlauch 4 entlang seiner Länge beidseitig mit einer Mehrzahl von Punktschweissungen am jeweiligen Stahlseilende 1 oder 2 befestigt werden. Beispielsweise könnten das zehn Punktschweissungen je Seite sein.

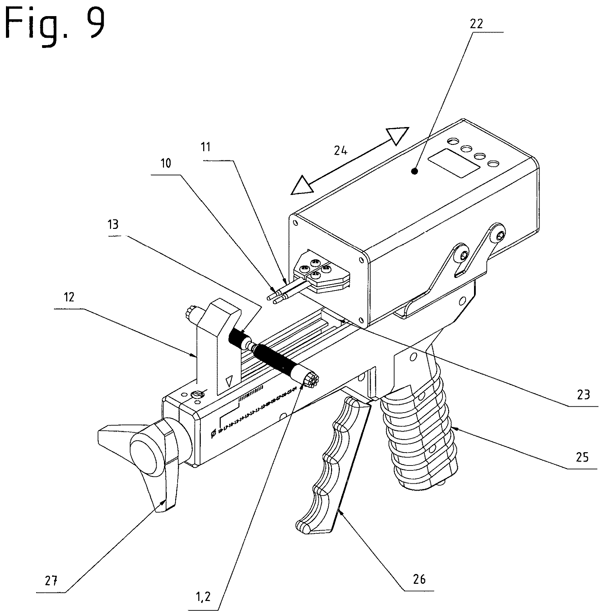

Eine zweite Ausführung der Vorrichtung zum Verbinden von zwei Stahlseilenden 1 und 2 ist in der Fig. 9 dargestellt. Im vorliegenden Beispiel weist diese Vorrichtung nur eine Halterung 12 mit einer Auflage 13 für ein Seilende 1 oder 2 auf. Denkbar wären aber auch zwei Auflagen 13, also je eine für ein Seilende 1 oder 2. Auch hier ist mindestens eine Punktschweisselektrode 10 und/oder 11 vorhanden, wobei es in diesem Beispiel deren zwei sind. Die mindestens eine Punktschweisselektrode 10 und/oder 11 ist an einem Bauteil 22 angeordnet, der entlang einer Linearführung 23 in Pfeilrichtung 24 in Richtung auf die besagte Halterung 12 bewegbar ist.

Das Bauteil 22 kann gehäuseartig sein und die zur Funktion der mindestens einen Punktschweisselektrode 10 und/oder 11 notwendigen elektrischen Einrichtungen in sich aufnehmen. Das können auch entsprechende Anzeigen, der Stromversorgung dienende Einrichtungen oder auch Schalter sein. Die Stromversorgung kann über das Netz erfolgen oder auch über mindestens ein Akkumulator oder Batterie erfolgen.

Diese vereinfachte Ausführung der Vorrichtung kann vom Benützer an einem Handgriff 25 gehalten werden, der in der vorliegenden, bevorzugten Ausführung als Pistolengriff ausgebildet ist. In dessen Bereich ist ein Abzug 26 vorhanden, hier in Form eines Hebels, mit dem das die mindestens eine Punktschweisselektrode 10 und/oder 11 tragende Bauteil 22 in Pfeilrichtung 24 bewegbar ist. Das kann entgegen der Kraft einer Feder sein. Das Einschalten der mindestens einen Punktschweisselektrode 10 und/oder 11 kann über einen separaten Schalter oder über den besagten Abzug 26 erfolgen. Selbstverständlich können sowohl ein Schalter, um die Vorrichtung betriebsbereit zu schalten, als auch ein bei Betätigung die mindestens eine Punktschweisselektrode 10 und/oder 11 einschaltender Abzug 26 vorhanden sein.

Die mindestens eine Halterung 12 mit der mindestens einen Auflage 13 für die Stahlseilenden 1 und 2 kann ihrerseits ebenfalls verstellbar sein, nämlich in ihrer jeweiligen Position in Richtung zur mindestens einen Punktschweisselektrode 10 und/oder 11 verschiebbar sein. Dieses Verstellen kann beispielsweise über ein Verstellrad 27 und eine entsprechende Spindel erfolgen. Da die Bewegung des Bauteils 22 in Pfeilrichtung 24 konstruktiv vorgegeben sein wird, ermöglicht die Verstellung der Position der mindestens einen Auflage 13 die Anpassung an unterschiedliche Durchmesser der jeweiligen Stahlseilenden 1 und 2.

Die Ausführung der erfindungsgemässen Vorrichtung gemäss Fig. 9 ist insbesondere dort geeignet, wo es vorwiegend um einzelne Verbindungen von zwei Stahlseilenden 1 und 2 geht, so wie es beispielsweise beim Seilwechsel in Aufzügen vorkommt. Die pistolenartige Vorrichtung wird dabei vom Benützer mit der einen Hand am Handgriff 25 gehalten, während mit der andern Hand die bereits zusammenhängenden Stahlseilenden 1 und 2 dem Verschweissen zugeführt werden. Die pistolenartige Vorrichtung wird dabei vorzugsweise nach unten gehalten, so dass die Stahlseilenden 1 und 2 auf der mindestens einen Auflage 13 aufliegen, die vom Handgriff beabstandet ist und in der vorliegenden Ausführung in Richtung des Laufendes der pistolenartigen Vorrichtung liegt. Das Stahlseilverbinden an sich entspricht den vorangegangenen Erläuterungen.

Es liegt im Rahmen der Erfindung nach den Patentansprüchen 4 und 11 die Stahlseilverbindung und die Vorrichtung auch anders als gezeichnet auszubilden, zumal die Zeichnung vorwiegend schematisch ist.

### Bezugszeichenverzeichnis:

- 1: Erstes Stahlseilende
- 2: Zweites Stahlseilende
- 3: Wärmeschlauch
- 4: Metallgewebeschlauch
- 5: Pressring
- 6: Hülse oder Ring
- 7: Presshülse
- 8: Verbindungsgelenk
- 9: Gummiring
- 10: Erste Punktschweisselektrode
- 11: Zweite Punktschweisselektrode
- 12: Halterung (für ein Seilende mit Metallgewebeschlauch)
- 13: Auflagen (am Umfang der Halterung)
- 14: Rotationsachse (der Auflage)
- 15: Positionierstift (erste Verstellsicherung der Auflage)
- 16: Druckfeder
- 17: Erste Pfeilrichtung (der ersten Verstellsicherung)
- 18: Zweite Pfeilrichtung (der Auflagen-Positionierung)
- 19: Führung (Laufschiene)
- 20: Arretierung (zweite Verstellsicherung der Auflage)
- 21: Anschlagpuffer
- 22: Bauteil (das die mindestens eine Punktschweisselektrode trägt)
- 23: Linearführung (des Bauteils 22)
- 24: Pfeilrichtung (Linearbewegung des Bauteils 22)
- 25: Handgriff (Pistolengriff)
- 26: Abzug
- 27: Verstellrad (für die Halterung 12)

## Patentansprüche

1. Verfahren zum Verbinden von zwei Stahlseilenden (1, 2), **dadurch gekennzeichnet, dass** mindestens ein Metallgewebeschlauch (4) über mindestens eines der Stahlseilenden (1, 2) gezogen wird, wobei der mindestens eine Metallgewebeschlauch (4) und das mindestens eine Stahlseilende (1, 2) mittels Schweissverbindungen miteinander verbunden werden.

2. Verfahren nach Anspruch 1, **dadurch gekennzeichnet, dass** ein Metallgewebeschlauch (4) über beide Stahlseilenden (1, 2) derart gezogen und verschweisst wird, dass zwischen den beiden Stahlseilenden (1, 2) ein Abstand bleibt, mit dem Zweck, diese Verbindung beweglich zu halten.

3. Verfahren nach Anspruch 1, **dadurch gekennzeichnet, dass** über jedes der zwei Stahlseilenden (1, 2) je ein separater Metallgewebeschlauch (4) gezogen und verschweisst wird und auf die einander gegenüberliegenden, freien Stahlseilenden (1, 2) je eine Presshülse (7) aufgesetzt wird, wobei diese beiden Presshülsen durch ein Verbindungsgelenk (8) beweglich miteinander verbunden werden.

4. Stahlseilverbindung von zwei Stahlseilenden (1, 2), hergestellt mit dem Verfahren nach Anspruch 1, **dadurch gekennzeichnet, dass** über mindestens eines der Stahlseilenden (1, 2) mindestens ein Metallgewebeschlauch (4) gezogen ist, wobei der mindestens eine Metallgewebeschlauch (4) und das mindestens eine Stahlseilende (1, 2) mittels Schweissverbindungen miteinander verbunden sind.

5. Stahlseilverbindung nach Anspruch 4, **dadurch gekennzeichnet, dass** ein Metallgewebeschlauch (4) über beide Stahlseilenden (1, 2) derart gezogen und verschweisst ist, dass zwischen den beiden Stahlseilenden (1, 2) ein Abstand bleibt, mit dem Zweck, diese Verbindung beweglich zu halten.

6. Stahlseilverbindung nach Anspruch 4, **dadurch gekennzeichnet, dass** über jedes der zwei Stahlseilenden (1, 2) je ein separater Metallgewebeschlauch (4) gezogen und verschweisst ist und auf die einander gegenüberliegenden, freien Stahlseilenden (1, 2) je eine Presshülse (7) aufgesetzt ist, wobei diese beiden Presshülsen durch ein Verbindungsgelenk (8) beweglich miteinander verbunden sind.

7. Stahlseilverbindung nach Anspruch 5, **dadurch gekennzeichnet, dass** ein zwischen den beiden Stahlseilenden (1, 2) liegender Teil des Metallgewebeschlauchs (4) mit einer Hülse oder mit einem Ring (6) versehen ist.

8. Stahlseilverbindung nach Anspruch 7, **dadurch gekennzeichnet, dass**, die Hülse oder der Ring (6) einen kleineren Querschnitt als der Metallgewebeschlauch (4) aufweist, wodurch der Querschnitt der Stahlseilverbindung, nämlich des Metallgewebeschlauchs (4) in diesem Bereich verringert ist.

9. Stahlseilverbindung nach Anspruch 6, **dadurch gekennzeichnet, dass** die beiden Presshülsen (7) so geformt und angeordnet sind, dass sie eine über das jeweilige Stahlseilende (1, 2) hinausragende Querschnittsverjüngung aufweisen, wobei je eine Ausformung des Verbindungsgelenkes (8) in je eine, beispielsweise gekurvt ausgebildete, Querschnittsverjüngung hineinragt und dort gelenkig und drehbar gehalten ist.

10. Stahlseilverbindung nach einem der Ansprüche 4 bis 9, **dadurch gekennzeichnet, dass** der mindestens eine Metallgewebeschlauch (4) zusätzlich mittels mindestens je eines Wärmeschrumpfschlauchs (3) am Stahlseilende (1, 2) festgehalten ist, wobei dieser mindestens eine Wärmeschrumpfschlauch (3) zum Beispiel an freien Enden des Metallgewebeschlauchs (4) angeordnet ist, die den jeweiligen entgegengesetzten Stahlseilenden (1, 2) abgewandt sind.

11. Vorrichtung zur Ausführung des Verfahrens zum Verbinden von zwei Stahlseilenden (1, 2) nach Anspruch 1, **gekennzeichnet durch** mindestens eine Punktschweisselektrode (10, 11) und mindestens eine Halterung (12) für das jeweilige, mit einem Metallgewebeschlauch (4) ummantelten Stahlseilende (1, 2), mit dem Zweck, das oder die Stahlseilenden (1, 2) während des Schweissens zu halten.

12. Vorrichtung nach Anspruch 11, **dadurch gekennzeichnet, dass** auf jeder Seite der mindestens einen Halterung (12) mindestens je zwei Punktschweisselektroden (10, 11) angeordnet sind, die entlang einer Stahlseilauflageachse voneinander beabstandet sind, mit dem Zweck, entlang des Stahlseilendes (1, 2) gleichzeitig mindestens zwei Punktschweissungen ausführen zu können.

13. Vorrichtung nach Anspruch 11 oder 12, **dadurch gekennzeichnet, dass** die mindestens eine Halterung (12) annähernd scheibenförmig ist und am ihrem Umfang zwei oder mehr Auflagen (13) unterschiedlichen Durchmessers aufweist, in die jeweils ein mit einem Metallgewebeschlauch (4) ummanteltes Stahlseilende (1, 2) entsprechenden Durchmessers einlegbar ist, wobei die Halterung (12) derart rotierbar ist, dass die jeweils benötigte Auflage (13) in einer Arbeitsposition liegt.

14. Vorrichtung nach einem der Ansprüche 11 bis 13, **dadurch gekennzeichnet, dass** die mindestens eine Halterung (12) im rechten Winkel einer Stahlseilauflageachse entlang mindestens einer Führung (19), nach rechts zur mindestens einen, ersten Punktschweisselektrode (10) oder nach links zur mindestens einen, zweiten Punktschweisselektrode (11) hin bewegbar ist (18).

15. Vorrichtung nach einem der Ansprüche 11 oder 12, **gekennzeichnet durch** einen Handgriff (25), insbesondere einem Pistolengriff, mit einem Abzug (26) zur Betätigung und/oder Verschiebung der mindestens einen Punktschweisselektrode (10, 11) in Richtung zur vom Handgriff (25) beabstandeten, mindestens einen Halterung (12) für das jeweilige, mit einem Metallgewebeschlauch (4) ummantelte Stahlseilende (1, 2).
